Europäisches Patentamt

European Patent Office

Office européen des brevets

(19)

(11) **EP 1 162 296 A1**

(12) **EUROPEAN PATENT APPLICATION**
published in accordance with Art. 158(3) EPC

(43) Date of publication:
**12.12.2001 Bulletin 2001/50**

(51) Int Cl.$^7$: **D03D 15/12**

(21) Application number: **00903987.6**

(86) International application number:
**PCT/JP00/00875**

(22) Date of filing: **16.02.2000**

(87) International publication number:
**WO 00/49213 (24.08.2000 Gazette 2000/34)**

(84) Designated Contracting States:
**AT BE CH CY DE DK ES FI FR GB GR IE IT LI LU MC NL PT SE**

(30) Priority: **18.02.1999 JP 4051899**
**07.04.1999 US 128054 P**
**09.06.1999 JP 16175699**
**30.06.1999 US 141244 P**

(71) Applicant: **SHOWA DENKO KABUSHIKI KAISHA**
**Tokyo 105-8518 (JP)**

(72) Inventors:
• **MURAKAMI, Shigeru, Showa Denko K.K.**
**Omachi-shi, Nagano 399-6461 (JP)**
• **NAMBA, Yoichi, Showa Denko K.K.**
**Omachi-shi, Nagano 399-6461 (JP)**
• **MASUKO, Tutomu, Showa Denko K.K.**
**Omachi-shi, Nagano 399-6461 (JP)**
• **KAMIJO, Yuichi**
**Showa Denko K.K., Omachi Works**
**Omachi-shi, Nagano 399-6461 (JP)**

(74) Representative: **Strehl Schübel-Hopf & Partner**
**Maximilianstrasse 54**
**80538 München (DE)**

(54) **CARBON FIBER WOVEN FABRIC AND METHOD FOR PRODUCTION THEREOF**

(57)     A carbon fiber woven fabric is obtained by soaking a cellulose-based woven fabric in a phosphoric acid or phosphoric acid compound solution, if necessary, and then firing in a non-oxidizing atmosphere. Also, by filling a resin powder into and heating the above-mentioned carbon fiber woven fabric or a carbon fiber woven fabric obtained by firing a cellulose-based woven fabric in a non-oxidizing atmosphere without treatment in a phosphoric acid or phosphoric acid compound solution, it is possible to obtain a carbon fiber woven fabric suitable as a porous carbon sheet which also exhibits water repellency. The carbon fiber woven fabric has a thickness in the range of 0.05-0.4 mm, a volume resistivity of less than 0.2 $\Omega\cdot$cm in the layer direction, and a gas permeability of 1500 cc/cm$^2$/hr/mmAq or greater, and is useful as a gas diffusing carbon sheet for a fuel cell.

**Description**

Cross Reference to Related Applications

This application claims the benefit of priority right based on U.S. Provisional Application No. 60/128054, filed on April 7, 1999 and U.S. Provisional Application No. 60/141244, filed on June 30, 1999.

Technical Field

The present invention relates to a carbon fiber woven fabric manufactured by firing a cellulose-based woven fabric, and to a process for its manufacture. The carbon fiber woven fabric has excellent chemical resistance, electric conductivity, heat conductivity, gas permeability and handleability and is a thin porous carbon sheet with uniform gas permeability within its layer, and it is therefore useful as a gas diffusing porous carbon sheet, catalyst sheet or the like, particularly for solid polymer fuel cells.

Background Art

Electric vehicles (EVs) and fuel cells have been developed in recent years in response to the problem of environmental pollution by exhaust gas from internal combustion engines of automobiles and the like, and further development of fuel cells has become essential in light of the problems of range, total energy efficiency and infrastructure which includes electrical recharging equipment; it has therefore been a goal to achieve fuel cells with higher performance and lighter weight.

Various types of fuel cells have been developed, such as alkali types, phosphoric acid types, melted carbonate types, solid electrolyte types and solid polymer types, depending on the nature of the electrolyte solution used, but attention is being focused on solid polymer type fuel cells as power sources because of their operability at low temperature, easy handleability and high output density.

The important components of a solid polymer fuel cell are the ion-exchange membrane to maintain appropriate moisture, and the conductive porous diffusion sheet for permeation treatment of the water and gas generated during the cell reaction. The diffusion sheet is usually a porous carbon thin sheet. (Hereunder this will be referred to as a "porous carbon sheet".)

The properties required for gas diffusion porous carbon sheets that are used in solid polymer fuel cells include thinness, satisfactory gas permeability, uniform gas permeability within the sheet layer, open pores in the porous sheet, excellent heat and electrical conductivity, low volume resistivity in the thickness direction, suitable strength for incorporation into the electrolyte cell, and excellent handleability.

Fuel cell gas diffusion porous carbon sheets hitherto disclosed include the porous carbon sheets for fuel cells described in Japanese Unexamined Patent Publication HEI No. 3-285873 and Japanese Unexamined Patent Publication HEI No. 5-254957, wherein carbon fibers are impregnated with a thermosetting resin as a binder, and firing and carbonization are carried out to manufacture a porous electrolyte sheet for fuel cells having numerous fine pores in the direction perpendicular to the sheet surface, and a carbon sheet with improved air permeability, heat conductivity, compressive strength, etc.

In addition, as in Japanese Examined Patent Publication HEI No. 2-58369, HEI No. 2-23505 and HEI No. 7-115970, for example, it has been disclosed that the most inexpensive manufacturing processes for such carbon sheets involve paper making of organic fibers and cellulose, and some of these methods have been tested.

However, because these methods require impregnation of thermosetting resins and high temperature carbonizing firing treatment, they have been characterized by poor productivity and high cost.

With recent advances in development, there is, in particular, a demand for even lower cost and high performance for solid polymer fuel cells, while lower cost and high performance are also becoming essential for gas diffusion porous carbon sheets. Moreover, because of the smaller size and lighter weights, thinner sheets on the order of no more than a few hundred micrometers have been desired.

The following fundamental problems are associated with porous carbon sheets obtained by the paper making methods mentioned above.

1) Because the organic fibers are made into paper sheets, the fibers are horizontal during the paper making process. That is, since the fiber orientation is aligned in the edgewise or layer direction, the heat and electrical conductivity in the layer transverse direction are inferior. It is therefore necessary to add conductive carbon particles during paper making process to increase the electrical conductivity, and this results in inconveniences such as reduced mechanical strength and gas permeability.

2) Because the prepared paper-like sheet is passed through a step of soaking in a resin solution, numerous closed holes with no effective function are present in the porous carbon sheet. The gas permeability is therefore not improved.

3) When creating a thin product, the starting paper-made sheet must also be thin, and this makes manufacturing difficult by the paper making method. This is because it is very difficult to maintain uniformity within the layer of the paper-made sheet, and the gas permeability within the layer also becomes non-uniform.

4) Porous carbon sheets prepared by soaking paper-made sheets in resins and heat treating them have low elasticity and are hard and fragile and, therefore, exhibit poor handleability during the assembly of cells.

Because the paper-making methods of the prior art are problematic in meeting these demands, new improved manufacturing methods have been desired.

Moreover, fuel cells generate large amounts of water during operation, due to their nature. When the water spills into the cell reaction zone, it creates a state of flooding, where the oxygen or other reaction gas supply channel becomes cut off and the cell reaction no longer takes place, resulting in drastically reduced cell output. Therefore porous carbon sheets with some degree of water repellency have also been desired.

Methods of weaving carbon fibers into woven fabrics have been considered in the past, but such methods are hampered by the high cost of carbon fibers, the steps for weaving, and the fact that the woven fabric holds the fibers in a horizontal state such that the properties in the layer transverse direction are unsatisfactory, as mentioned above.

Disclosure of the Invention

As a result of diligent study, the present inventors have considered the use of cellulose-based fiber woven fabrics as starting materials, and have attempted to use them for fired and carbonized carbon fiber woven fabrics. It was found that inexpensive carbon fiber woven fabrics with relatively good gas permeability can be obtained thereby.

The present invention therefore provides the following:

(1) A carbon fiber woven fabric characterized by being obtained by firing a cellulose-based woven fabric, and by having a thickness in the range of 0.05-0.4 mm, a volume resistivity of less than 0.2 $\Omega \cdot$cm in the layer direction, and a gas permeability of not less than 1500 cc/cm$^2$/hr/mmAq.

(2) A carbon fiber woven fabric according to (1), wherein the compressive strength is not less than 70 kgf/cm$^2$.

(3) A carbon fiber woven fabric according to (1) or (2), wherein the electrical resistance in the direction of thickness of the woven fabric is no greater than 50 m$\Omega \cdot$cm$^2$ as measured between two copper plates with a load of 4 kgf/cm$^2$.

(4) A carbon fiber woven fabric according to (1) to (3), wherein the orientation of the carbon fiber woven fabric as defined in the present specification includes an orientation component of 4/9 or greater.

(5) A carbon fiber woven fabric according to (1) to (4), wherein the orientation of the carbon fiber woven fabric as defined in the present specification is an average of 1/3 or greater.

(6) A carbon fiber woven fabric according to (1) to (5) which is a plain weave.

(7) A carbon fiber woven fabric according to (1) to (6) which has a water repellent property.

(8) A gas diffusion porous carbon sheet for a solid polymer fuel cell which comprises a carbon fiber woven fabric according to (1) to (7).

(9) A process for the manufacture of a carbon fiber woven fabric, characterized by firing a cellulose-based woven fabric in a non-oxidizing atmosphere.

(10) A process for the manufacture of a carbon fiber woven fabric according to (9), wherein the cellulose-based woven fabric is soaked with a phosphoric acid or phosphorus compound solution.

(11) A process for the manufacture of a carbon fiber woven fabric according to (9) or (10), wherein the firing temperature is in the range of 900-3000$^\circ$C.

(12) A process for the manufacture of a carbon fiber woven fabric according to (9) to (11), which includes coating the fired carbon fiber woven fabric with a water-repellent resin.

Brief Description of the Drawings

Figs. 1A to 1C show plain woven fabrics, wherein Fig. 1A is a plan view, Figs. 1B and 1C are lengthwise and widthwise cross-sectional views in the directions of X and Y, and Fig. 1C illustrates the definition of the degree of orientation according to the invention.

Fig. 2 is a cross-sectional view of the basic construction of a solid polymer fuel cell using a porous carbon sheet of the invention.

Best Mode for Carrying Out the Invention

The present invention is characterized in that for manufacture of a porous carbon sheet, a cellulose-based fiber woven fabric is fired as the starting material.

According to the invention, the carbon fiber sheet is prepared as a fabric so that despite its thinness it can exhibit sufficient strength and excellent uniformity within its surface.

Furthermore, when a fabric of the starting fibers before carbonization-firing is used instead of using carbon fibers and weaving them into a woven fabric, the starting fiber yarn itself which has free orientation properties is soft with the fibers not aligned in the edgewise or layer direction, as opposed to a stiff woven fabric of carbon fibers, and therefore the orientation property is greater in the layer transverse direction and the electrical conductivity, heat conductivity and compressive strength in the thickness direction are superior.

Moreover, the carbon fiber woven fabric of the invention has a high open void volume with no closed voids, since there is no step of soaking in a resin solution as with the paper making methods described above. The cellulose-based woven fabric used as the starting material is subjected to solid phase carbonization without melting, and therefore the form of the fibers of the green fabric before firing carbonization reflects the carbon fiber woven fabric as the finished product, so that there is no breakage of the fibers, the strength is excellent and the handleability is satisfactory.

Japanese Examined Patent Publication HEI No. 2-58369 describes improvement in strength by impregnation treatment in a metal phosphate, but sheets prepared by paper making methods such as the method disclosed here have short and non-continuous carbon fibers or else the fibers are horizontal, for which reasons the improved strength of the porous carbon sheet is not reflected to any great extent; however, it is believed that when the filaments are continuous or not many of the components are oriented in the direction of thickness, such as in the carbon fiber woven fabric of the invention, there is exhibited a greater effect of improvement in the strength by the phosphoric acid or phosphorus compound.

After filling the carbon fiber woven fabric of the invention with resin powder, it may be heat treated at the resin melting temperature to achieve improved strength by the resin reinforcement and to exhibit water repellency. Since the fibers are horizontal in the case of paper making or in the case of a woven fabric of carbon fibers, it is difficult to uniformly fill the interior of the sheet with the resin powder. There is a slight effect of impregnation of the resin after firing-carbonization on the gas permeability, but it is not enough to impair the properties to any great extent, unlike impregnation of the resin before firing, as in paper making methods due to differences in the resin wettability leading to different permeability of the resin into the fabric.

The fabric composed of cellulose-based fibers or cellulose-containing fibers as the starting material according to the invention may be a natural cellulose fiber fabric of cotton, hemp or the like, or it may be an artificial cellulose fiber fabric of viscose artificial silk, acetate artificial silk, or the like.

The method of weaving the starting fabric is not particularly restricted and the weave may be any of various types including a plain weave, twill weave or satin weave, but it is preferably a plain weave from the standpoints of uniformity within the surface and of strength.

For example, a plain woven fabric is very inexpensive and readily obtainable, as well as quite easy to handle. The starting material for the invention is an already woven fabric, and a fabric with a large area may be cut out beforehand depending on the intended use for provision as the starting material in the manufacturing process of the invention, or a carbon fiber woven fabric manufactured with a large area may be cut out to the necessary size.

The steps are greatly simplified since there is no step of weaving carbon fibers, as for conventional carbon fiber woven fabrics.

According to the invention, it was found that a cotton fabric obtained particularly by plain weaving of cellulose-based fiber spun yarn or twisted yarn, or yarn obtained using fibers of no greater than a specified thickness, can be used as a starting material to give a carbon fiber woven fabric with excellent properties for fuel cells.

The carbon fiber woven fabric of the invention is characterized in that by using a cellulose-based fabric as the starting material before firing, since the starting fiber yarn itself has a soft nature, the orientation in the layer transverse direction of the cellulose-based fiber woven fabric, and therefore of the carbon fiber woven fabric, (the direction normal to the surface or layer direction of the woven fabric) can be increased.

According to the invention, the orientation in the direction of the thickness of the carbon fiber woven fabric is defined as follows.

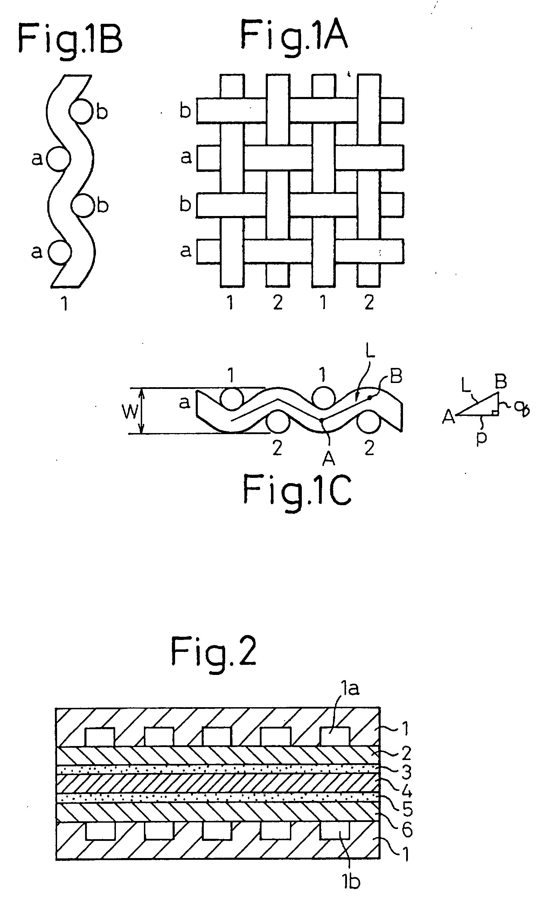

Figs. 1A to 1C are cross-sectional illustrations of carbon fiber fabrics obtained with plain woven fabrics as the starting materials. The carbon fiber woven fabric of the invention retains virtually the exact shape of the cellulose-based fibers. Thus even a cross-sectional view shows virtually the same cross-sectional shape as the cellulose-based fibers. The fibers are sewn with the weft aligned at equal spacings and the warp woven therein; here, p is the horizontal component and q the vertical component of the line L connecting the lowest point A and highest point B of the center of the warp from one weft to the next weft. The value of p is equal to the weft spacing. If the fibers are free of narrowing or crushing distortion and the weaving is carried out as shown in Figs. 1A to 1C, then q may be considered almost the value of the fabric width w minus the warp thickness d.

The orientation is defined as q/(p + q). According to this definition, the orientation is 0 when completely horizontal and 1 when completely vertical, although in actuality intermediate values are exhibited with continuous fibers.

The orientation component can be measured by observing the cross-section and yarn thickness with a light microscope, an SEM or the like.

In the case of fabrics such as plain weaves in which the entirety is uniformly woven, the average orientation of the total fabric can be determined by examining one section thereof.

The carbon fiber woven fabric of the invention, reflecting the cellulose-based woven fabric which is used as the starting material, may have a high orientation of 1/3 or greater or even 4/9 or greater at certain sections of the woven fabric. By thus including components with high orientation (referred to as orienting components) in all or a part of the carbon fiber woven fabric, it is possible to improve the electric conductivity and heat conductivity in the layer transverse direction of the entire woven fabric. Orienting components with a higher degree of orientation are therefore preferred.

When the woven fabric is a plain weave, the orientation of each orienting component is almost exactly the average orientation of the entire carbon fiber woven fabric, but with special fabric textures other than plain weaves, such as diagonal weaves or satin weaves, the orientation of specific orienting components are not necessarily the average orientation of the woven fabric as a whole. The carbon fiber woven fabric of the invention can exhibit a high value even for the average orientation, compared to mechanically woven carbon fibers or pressed split carbon fibers obtained using conventional carbon fibers. The upper limit for the average orientation is theoretically 1/2 when using filaments having the same thickness for warp and weft in the absence of narrowing or crushing of the fibers, but if the warp and weft thickness are altered a value of greater than 1/2 is also possible. By thus having a high average orientation, the carbon fiber woven fabric of the invention can exhibit high electric conductivity and high heat conductivity in the layer transverse direction.

According to the invention, the cellulose-based woven fabric yarn used as the starting material is preferably constructed with fibers having a post-firing thickness of no greater than 10 µm. By using filament-forming fibers of such small thickness, it is possible to achieve more open pores in-plane contributing to the gas permeability and thus obtain a higher performance gas diffusing sheet. However, if the fibers are too thin the gas permeability is affected by the exponential factor of the open pores size, leading to inconveniences such as lower gas permeability.

According to the invention, this manner of cellulose-based woven fabric as the starting material may be fired in a non-oxidizing atmosphere to produce a carbon fiber woven fabric having properties including a thickness of 0.05-0.4 mm, a compressive strength of 70 kgf/cm$^2$ or greater and a gas permeability of 1500 cc/cm$^2$/hr/mmAq or greater.

The thickness of the carbon fiber woven fabric of the invention is in the range of 0.05-0.4 mm. If the thickness is less than 0.05 mm, the strength is insufficient for the demands of a gas diffusing carbon sheet used in a solid polymer-type fuel cell, and if it is greater than 0.4 mm, the thickness of cell stacks in solid polymer-type fuel cells increases to an impractical level.

The thickness of the woven fabric of the starting material for obtaining a carbon fiber woven fabric of the desired thickness will usually need to be between 0.1 and 0.2 mm thicker. Selection of the starting material thickness must be confirmed by prior testing under the same conditions. The thickness of the starting material woven fabric thickness (filament thickness) can be selected to give a carbon fiber woven fabric having a thickness of 0.05-0.4 mm according to the invention.

The compressive strength of the carbon fiber woven fabric of the invention is 70 kgf/cm$^2$ or greater. Here, the compressive strength is the value obtained by laminating 50 samples, compressing at a loading rate of 0.5 mm/min, measuring the maximum load resistance, dividing this by the area, and calculating the maximum load resistance per unit area. If the compressive strength is less than 70 kgf/cm$^2$, the sheet will break when clamped during assembly of a cell stack.

The gas permeability of the carbon fiber woven fabric of the invention is 1500 cc/cm$^2$/hr/mmAq or greater. The gas permeability is the value obtained by calculation from the volume (cc) of permeating gas per hour (hr) and the differential pressure P (water pressure, mmAq), based on the following equation, for air passing at 3000 mL/min through a 50 cm$^2$ carbon fiber fabric.

$$\text{Gas permeability} = 3000 \text{ mL/min} \times 60 \text{ min/50 cm}^2/P \text{ mmAq}$$

If the gas permeability is less than 1500 cc/cm$^2$/hr/mmAq, the fuel cell electric generating properties are impaired. The gas permeability is preferably 3000 cc/cm$^2$/hr/mmAq or greater.

The carbon fiber woven fabric of the invention may have a volume resistivity of less than 0.2 Ω·cm and even not more than 0.13 Ω·cm in the planar direction.

The carbon fiber woven fabric of the invention may have an electric resistance of no greater than 50 m·Ω·cm$^2$

and even no greater than 40 m·Ω·cm$^2$ in the layer transverse direction, as measured between copper plates with a load of 4 kgf/cm$^2$. As will be clear from the aforementioned method of measurement, this resistance in the layer transverse direction includes the contact resistance with the copper plates, but since the carbon fiber woven fabric of the invention is characterized by the above-mentioned high orientation in the layer transverse direction, it will have a low electrical resistance in the layer transverse direction.

The carbonization rate of the carbon fiber woven fabric of the invention can be greatly increased by soaking the cellulose-based woven fabric in phosphoric acid or a phosphoric acid compound before firing.

The carbon fiber woven fabric of the invention may also be imparted with water repellency. Water repellency can be achieved by coating the carbon fiber woven fabric with a resin. Such coating with a resin will have also have an effect of enhancing the strength of the carbon fiber woven fabric. The resin used may be any resin that exhibits water repellency and thermoplasticity, such as polyvinylidene fluoride, divinylbenzene, Teflon (TM), polyethylene, polypropylene or the like. Fluorine-containing resins are preferred for their high water repellency.

The amount of resin may be in the range of 5-60 wt% based on the carbon fiber woven fabric. At less than 5 wt% the imparted water repellency is insufficient, while at greater than 60 wt% properties including electrical resistance and gas permeability may be undesirably affected.

A process for the manufacture of a carbon fiber woven fabric of the invention will now be explained.

According to the invention, the carbon fiber woven fabric may be prepared by soaking the cellulose-based woven fabric in a phosphoric acid or phosphoric acid compound solution if necessary, and then firing in a non-oxidizing atmosphere.

The phosphoric acid or phosphoric acid compound used in the process of the invention to provide an effect of improving the carbonization rate includes aqueous phosphoric acid as well as phosphates such as aqueous ammonium phosphate, magnesium phosphate, calcium phosphate, sodium phosphate, potassium phosphate and aluminum phosphate, among which water-soluble aqueous aluminum phosphate is preferred for ease of handleability and operation.

A coating method, an immersion method or the like may be employed to soak the cellulose-based fiber woven fabric with the phosphoric acid or phosphoric acid compound.

The firing and carbonization are carried out, for example, by firing in a non-oxidizing atmosphere in coke in an Atchison furnace or in a Reed Hammer firing furnace, or in a non-oxidizing atmosphere of an inert gas such as nitrogen or argon.

The firing temperature is preferably 900°C or higher in order to obtain strength characteristics which allow use as porous carbon sheets for fuel cells.

In special consideration of the electric conductivity, the firing is more preferably carried out at 1500°C to 2300°C. It is preferably no higher than 3000°C because with higher temperatures the strength begins to lower and the gas permeation is reduced.

The fired and carbonized carbon fiber woven fabric is filled with resin powder and heat treated to impart enhanced strength and water repellency.

The resin powder may be filled into the carbon fiber woven fabric of the invention in a state of dispersion such as in a dispersion-type solution. The filling method may be coating, an immersion or the like.

The resin powder-filled carbon fiber woven fabric is heat treated at the melting temperature of the resin. Heating at the melting temperature is the optimum temperature for uniform penetration into the woven fabric as the powder resin undergoes a reduction in viscosity with increasing temperature. If the heating temperature is increased too high, deterioration of the resin or foaming of the resin may occur, resulting in a lack of strength-enhancing effect. Foaming may also reduce the gas permeability. Consequently, it is preferred to conduct the heating at a temperature of no more than about 100°C higher than the softening temperature of the resin. If the heating temperature is too low, on the other hand, the viscosity of the resin is not sufficiently lowered, and the filling is inadequate. The heating is therefore preferably conducted at a temperature of at least 50°C higher than the softening temperature.

The carbon fiber woven fabric of the invention obtained in the manner described above is useful as a porous carbon sheet, catalyst sheet or the like for fuel cells.

Fig. 2 is an illustration of a carbon fiber woven fabric of the invention used as a gas diffusing porous carbon sheet for a solid polymer fuel cell.

In Fig. 2, a porous anode gas diffusing sheet 2 and grooved separator sheet 1 are situated at the anode side of an ion-exchange membrane 4 made of a solid polymer electrolyte, via an anode catalyst layer 3 made of Pt-carrying carbon black or the like, while a porous cathode gas diffusing sheet 6 and grooved separator sheet 1 are situated at the cathode side, via a cathode catalyst layer 5 made of Pt-carrying carbon black or the like.

The solid polymer electrolyte 4 may be perfluorocarbonsulfonic acid, and the ion-exchange membrane has a thickness of, for example, about 50-200 μm. The grooved separator sheet 1 is fabricated from a molded expanding graphite sheet or a carbon black molded sheet, and the grooves 1a, 1b form flow channels for the fuel gas such as $H_2$, the oxidizing gas, and the reaction water.

For a fuel cell construction, the gas diffusing sheets 2,6 are between the catalyst layers 3,5 and the grooved separator sheet 1, and the use of porous carbon sheets has been studied in the past to meet the requirements of chemical stability in oxidation-reduction atmospheres, high electric conductivity, high gas permeability and high compressive strength. The carbon fiber woven fabric of the invention satisfies all of the aforementioned required properties and is therefore particularly useful as a porous carbon sheet for such gas diffusing sheets.

A solid polymer fuel cell is operated at around 100°C, but the carbon fiber woven fabric of the invention can also be utilized in phosphoric acid-type fuel cells that are operated at high temperatures.

Examples

The present invention will now be explained in further detail by way of examples. The various properties in the examples were measured by the methods described below.

The thickness was measured with a micrometer.

The bulk density was calculated from the thickness and dimensions as measured with a slide caliper, and the weight as measured by a scale.

The compressive strength was determined by laminating 50 samples, compressing them at a loading rate of 0.5 mm/min, measuring the maximum load resistance, dividing this by the area, and calculating the maximum load resistance per unit area.

The layer transverse electrical resistance (layer transverse resistance) was determined by cutting out a 2 cm square ($4 \text{ cm}^2$) sample, sandwiching it between copper plates and running a direct current of $1 \text{ A/cm}^2$ through the copper plates while clamping with a load of $4 \text{ kgf/cm}^2$, and measuring the drop in voltage (V) due to contact between the sample and the copper plates. The results were used to determine the flatwise electrical resistance according to the following equation.

$$\text{Layer transverse electrical resistance} = \text{voltage drop (V)/current density (A/cm}^2)$$

The volume resistivity in the layer direction was measured by the standard four-point method.

The gas permeability was determined by passing air through a $50 \text{ cm}^2$ section of the sample at room temperature at 3000 mL/min, and calculating the permeation per $\text{cm}^2$ per hour during that time from the pressure loss (PmmAq), according to the equation given below.

The orientation was measured by $q/(p+q)$ as defined above, based on SEM observation. Since all of the fabrics in Tables 1 to 3 are plain weave fabrics with uniform compositions, the orientations represent both the orientations of the specific orienting components and the average orientations.

The water repellency was determined by cutting out a short strip with a width of 15 mm and a length of 25 mm from the sample, immersing 5 mm of the tip in distilled water at 15-20°C for one minute, measuring the height of the water in cm units from the position in the water to the position to which the water was drawn up, and evaluating the water repellency based on the condition of water absorption.

Examples 1-4

The following examples employed a plain woven cotton cloth (hereunder referred to as "cotton cloth A") with spun cotton yarn of 200 μm thickness using a conventional fiber size of 20 μm with a fabric thickness of 0.3 mm, and aluminum phosphate.

The meter yarn count of the woven fabric yarn was No. 20 (20 km/kg), and the plain weave thread count was $60 \times 60/(2.54 \text{ cm})^2$ (specific weight: $153 \text{ g/m}^2$).

Cotton cloth A was cut into ten 400 mm squares and these were used as green samples. After immersing each of these in a 15% aqueous aluminum phosphate solution, they were drawn up and drained, and used as 5 wt% aluminum phosphate soaked sheets. The soaked sheets were sandwiched between graphite wafers, embedded in packing coke and placed in an electric furnace with a non-oxidizing atmosphere for one week for carbonization firing of the ten sheets at 900°C.

Five of the sheets were sandwiched between graphite wafers and fired at 1800°C in an Atchison graphitizing furnace.

The sheets obtained after firing at 900°C were carbon fiber woven fabrics with satisfactory appearance, a thickness of 0.28 mm and 352 mm square dimensions, remaining in the shape of the plain woven green samples.

Similarly the sheets after firing at 1800°C were carbon fiber woven fabrics with satisfactory appearance, a thickness of 0.26 mm and 348 mm square dimensions, remaining in the shape of the plain woven green samples.

Five each of the 900°C fired samples and the 1800°C fired samples were used as property measurement samples and washed and dried, and the properties were measured upon removing the residual aluminum phosphate after heat treatment.

Table 1 shows the results of measurement for each of the five samples of Examples 1-2.

Green samples were also prepared without aluminum phosphate treatment and ten samples each fired at 900°C and 1800°C in the same manner as above. The properties of the obtained carbon fiber woven fabrics were measured in the same manner as Examples 1-2. The results for Examples 3-4 are also shown in Table 1.

Table 1

| | Pretreatment | Firing temperature °C | Fabric thickness mm | Bulk density g/cm$^3$ | Compressive strength kgf/cm$^2$ | Layer transverse resistance mΩ·cm$^2$ | Gas permeability cc/cm$^2$/hr/mmAq | Resistivity Ω·cm | Orientation |
|---|---|---|---|---|---|---|---|---|---|
| Example 1 | aluminum phosphate | 900 | 0.28-0.29 | 0.42-0.43 | 73-78 | 21-23 | 7700-8100 | 0.13-0.15 | ≥1/3 |
| Example 2 | aluminum phosphate | 1800 | 0.26-0.26 | 0.44-0.44 | 92-97 | 18-20 | 4100-4500 | 0.12-0.14 | ≥1/3 |
| Example 3 | none | 900 | 0.23-0.23 | 0.28-0.29 | 30-35 | 43-48 | 8500-9100 | 0.12-0.14 | ≥1/3 |
| Example 4 | none | 1800 | 0.21-0.21 | 0.30-0.30 | 41-45 | 40-44 | 4500-5100 | 0.11-0.13 | ≥1/3 |

Examples 5-8

Four of the carbon fiber woven fabrics from each of Examples 1-4 were immersed in a Teflon dispersion solution (FEP Dispersion Solution, Daikin Industries Co., Ltd.) and drawn out from the solution, to fill each carbon fiber woven fabric with the FEP powder to 10 mass%.

Each of these was sandwiched between graphite wafers and heat treated at 300°C for 30 minutes. After the heat treatment, the compressive strength, layer transverse resistance and gas permeability were measured in the same manner as Examples 1-4. The results for Examples 5-8 are shown in Table 2.

The results demonstrate that addition of Teflon enhances the compressive strength without significantly lowering performance in terms of layer transverse resistance or gas permeability.

Examples 11-14

One each of the remaining carbon fiber woven fabrics of Examples 1-4 was also subjected to property measurements. The results for Examples 11-14 are also shown in Table 2. This table demonstrates that addition of Teflon prevents water absorption and enhances water repellency.

Table 2

| | Pretreatment | Firing temperature °C | Post-treatment | Compressive strength kgf/cm$^2$ | Layer transverse resistance m$\Omega \cdot$cm$^2$ | Water absorption height cm | Gas permeability cc/cm$^2$/hr/mmAq | Resistivity $\Omega \cdot$cm | Orientation |
|---|---|---|---|---|---|---|---|---|---|
| Example 5 | aluminum phosphate | 900 | Teflon | 99-108 | 21-37 | 0 | 6900-7400 | 0.13-0.15 | ≥1/3 |
| Example 6 | aluminum phosphate | 1800 | Teflon | 107-118 | 19-22 | 0 | 3600-4000 | 0.13-0.16 | ≥1/3 |
| Example 7 | none | 900 | Teflon | 71-77 | 45-50 | 0 | 7600-8100 | 0.13-0.14 | ≥1/3 |
| Example 8 | none | 1800 | Teflon | 78-85 | 41-46 | 0 | 4100-4700 | 0.11-0.13 | ≥1/3 |
| Example 11 | aluminum phosphate | 900 | none | 77 | 21 | 4 | 7100 | 0.13-0.15 | ≥1/3 |
| Example 12 | aluminum phosphate | 1800 | none | 95 | 20 | 3 | 4400 | 0.11-0.13 | ≥1/3 |
| Example 13 | none | 900 | none | 33 | 48 | 3 | 8900 | 0.12-0.14 | ≥1/3 |
| Example 14 | none | 1800 | none | 43 | 42 | 2 | 4700 | 0.11-0.13 | ≥1/3 |

Examples 21-32

A cotton cloth of the same weight per square meter obtained by plain weaving yarns made by twisting two yarns of the same size as the yarn of cotton cloth A used in Examples 1 and 2 (same size of the fibers composing the yarns) (cotton cloth B, weight: 325 g/m$^2$) and a cotton cloth of the same weight per square meter obtained by plain weaving of non-twisted yarn narrower than cotton cloth A and of a size such that the fiber size after firing in a non-oxidizing atmosphere was 8 µm (cotton cloth C), were fired at 900°C and 1800°C in the same manner as Examples 1 and 2.

After firing, carbon fiber woven fabrics from cotton cloths B and C were immersed in a dispersion solution in the same manner as Examples 11 and 12 and then heated and Teflon treated under the same conditions.

Separately, cotton cloth B was fired in a non-oxidizing atmosphere at 900°C and 1800°C and directly used as a carbon fiber woven fabric without Teflon treatment, and the properties of both were examined by the same methods as Examples 1-8. The water absorption height was only determined for the Teflon-treated sample.

The results for Examples 21-32 are shown in Table 3. The obtained carbon fiber woven fabrics had satisfactory appearances with thicknesses of 0.2-0.3 mm.

Table 3

| | Fabric type | Pre-treatment | Firing temperature °C | Post-treatment | Compressive strength kgf/cm² | Layer transverse resistance mΩ·cm² | Gas permeability cc/cm²/hr/mmAq | Water absorption height | Resistivity Ω·cm | Orientation |
|---|---|---|---|---|---|---|---|---|---|---|
| Example 21 | cotton fabric twisted yarn | none | 900 | Teflon | 105-116 | 22-35 | 5000-5400 | 0 | 0.12-0.14 | ≥1/3 |
| Example 22 | cotton fabric twisted yarn | none | 1800 | Teflon | 113-125 | 18-23 | 3800-4100 | 0 | 0.10-0.11 | ≥1/3 |
| Example 23 | cotton fabric narrow yarn | none | 900 | Teflon | 103-115 | 24-36 | 4500-4900 | 0 | 0.13-0.15 | ≥1/3 |
| Example 24 | cotton fabric narrow yarn | none | 1800 | Teflon | 110-121 | 17-22 | 3300-3600 | 0 | 0.12-0.14 | ≥1/3 |
| Example 25 | cotton fabric twisted yarn | none | 900 | none | 71-73 | 44-48 | 6000-6300 | - | 0.12-0.14 | ≥1/3 |
| Example 26 | cotton fabric twisted yarn | none | 1800 | none | 87-90 | 39-43 | 4400-4800 | - | 0.10-0.11 | ≥1/3 |
| Example 27 | cotton fabric narrow yarn | none | 900 | none | 70-73 | 40-44 | 5800-6100 | - | 0.12-0.13 | ≥1/3 |
| Example 28 | cotton fabric narrow yarn | none | 1800 | none | 80-85 | 38-41 | 4200-4400 | - | 0.11-0.12 | ≥1/3 |
| Example 29 | cotton fabric twisted yarn | none | 2200 | none | 82-88 | 18-25 | 2800-3200 | - | 0.11-0.11 | ≥1/3 |
| Example 30 | cotton fabric twisted yarn | none | 2600 | none | 70-76 | 15-22 | 2900-3500 | - | 0.09-0.09 | ≥1/3 |
| Example 31 | cotton fabric twisted yarn | none | 2200 | Teflon | 110-125 | 23-29 | 2700-3300 | 0 | 0.12-0.13 | ≥1/3 |
| Example 32 | cotton fabric twisted yarn | none | 2600 | Teflon | 105-118 | 17-26 | 2800-3400 | 0 | 0.10-0.11 | ≥1/3 |

These results demonstrate that these obtained carbon fiber woven fabrics were also carbon fiber woven fabrics with excellent properties, that the same properties are obtained even when cotton cloths woven with twisted or narrow yarn are fired at a prescribed temperature in a non-oxidizing atmosphere, and especially that Teflon treatment imparts water repellency and enhances the strength properties.

Industrial Applicability

The carbon fiber woven fabric according to the invention can be obtained by a low cost process suitable for mass production, using a cheap and readily available commercial cellulose-based fiber woven fabric as the starting material, and since the carbon fiber woven fabric is obtained in a form retaining the shape of the starting fabric, it is easy to handle and is useful as a gas diffusing porous carbon sheet, catalyst sheet or the like for alkali-type, phosphoric acid-type or solid polymer-type fuel cells which require the use of carbon sheet materials.

**Claims**

1. A carbon fiber woven fabric **characterized by** being obtained by firing a cellulose-based woven fabric, and by having a thickness in the range of 0.05-0.4 mm, a volume resistivity of not less than 0.2 $\Omega \cdot$cm in the layer direction, and a gas permeability of not less than 1500 cc/cm$^2$/hr/mmAq.

2. The carbon fiber woven fabric as claimed in claim 1, wherein the compressive strength is not less than 70 kgf/cm$^2$.

3. The carbon fiber woven fabric as claimed in claim 1, wherein the electrical resistance in the direction of thickness of the woven fabric is no greater than 50 m$\Omega \cdot$cm$^2$ as measured between two copper plates with a load of 4 kgf/cm$^2$.

4. The carbon fiber woven fabric as claimed in claim 1, wherein the orientation of the carbon fiber woven fabric as defined in the present specification includes an orientation component of 4/9 or greater.

5. The carbon fiber woven fabric as claimed in claim 1, wherein the orientation of the carbon fiber woven fabric as defined in the present specification is an average of 1/3 or greater.

6. The carbon fiber woven fabric as claimed in claim 1 which is a plain weave.

7. The carbon fiber woven fabric as claimed in claim 1 which has a water repellent property.

8. The gas diffusion porous carbon sheet for a solid polymer fuel cell which comprises a carbon fiber woven fabric as claimed in claim 1.

9. A process for manufacture of a carbon fiber woven fabric, **characterized by** firing a cellulose-based woven fabric in a non-oxidizing atmosphere.

10. The process for manufacture of a carbon fiber woven fabric as claimed in claim 9, wherein said cellulose-based woven fabric is soaked with a phosphoric acid or phosphorus compound solution.

11. The process for the manufacture of a carbon fiber woven fabric as claimed in claim 9, wherein the firing temperature is in the range of 900-3000°C.

12. The process for the manufacture of a carbon fiber woven fabric as claimed in claim 9, which includes coating the fired carbon fiber woven fabric with a water-repellent resin.

# Fig.1B

# Fig.1A

# Fig.1C

# Fig.2

## INTERNATIONAL SEARCH REPORT

| International application No. |
| --- |
| PCT/JP00/00875 |

A. CLASSIFICATION OF SUBJECT MATTER
  Int.Cl⁷  D03D15/12

According to International Patent Classification (IPC) or to both national classification and IPC

B. FIELDS SEARCHED

Minimum documentation searched (classification system followed by classification symbols)
  Int.Cl⁷  D03D15/12

Documentation searched other than minimum documentation to the extent that such documents are included in the fields searched

Electronic data base consulted during the international search (name of data base and, where practicable, search terms used)
  WPI/L

C. DOCUMENTS CONSIDERED TO BE RELEVANT

| Category* | Citation of document, with indication, where appropriate, of the relevant passages | Relevant to claim No. |
| --- | --- | --- |
| X | US, 4723959, A (Nitto Boseki Co.,Ltd.), 09 February, 1988 (09.02.88), Full text, & JP, 63-14092, B | 1-12 |
| A | JP, 59-144625, A (Oji Paper Co., Ltd.), 18 August, 1984 (18.08.84), Full text, (Family: none) | 1-12 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 15 May, 2000 (15.05.00) | 23.05.00 |

| Name and mailing address of the ISA/ Japanese Patent Office | Authorized officer |
| --- | --- |
| Facsimile No. | Telephone No. |

Form PCT/ISA/210 (second sheet) (July 1992)